# EUROPEAN PATENT SPECIFICATION

(11) **EP 0 636 537 B1**
(45) Date of publication and mention of the grant of the patent: **02.06.1999**
(21) Application number: 94111665.9
(22) Date of filing: 26.07.1994
(51) Int. Cl.: B62M 23/02, B62M 11/14, F16H 37/02

(54) **Power transmission system**
Antriebsübertragungssystem
Système de transmission de puissance

(30) Priority: 26.07.1993 JP 202543/93; 26.07.1993 JP 202544/93; 05.07.1994 JP 153658/94
(43) Date of publication of application: 01.02.1995
(73) Proprietor: YAMAHA HATSUDOKI KABUSHIKI KAISHA, Iwata-shi Shizuoka-ken, 438 (JP)
(72) Inventor: Takata, Nozomu, Iwata-shi, Shizuoka-ken (JP)
(74) Representative: Grünecker, Kinkeldey, Stockmair & Schwanhäusser Anwaltssozietät

(56) References cited:
- EP-A- 0 517 224
- CH-A- 593 822
- GB-A- 658 966

## Description

The present invention relates to a power transmission system, specifically for an electrically power assisted vehicle such as a bicycle, comprising a rotary motor output shaft of an electrical motor, a planetary type transmission disposed coaxially to said output shaft drivingly connected thereto and a driven component drivingly connected with said planetary type transmission.

Said power transmission system is known from CH-A-593 822, however, shows the following problems.

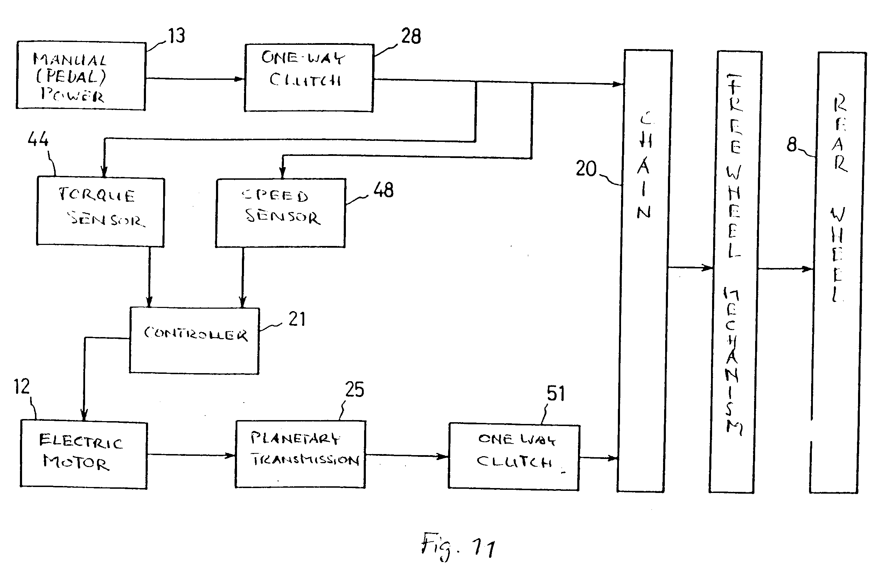

Conventionally, when a driven device is attached to a motor through a transmission, it has been a common practice to form annular stepped portions on the driven device, the motor and the transmission and to fit said stepped portions to each other to obtain axial alignment of the component. A conventional attachment structure for a motor having a transmission connected thereto is shown in figure 12.

Figure 12 shows a motor 101, a planetary gear type transmission 102 (hereinafter only called transmission) and a driven device 103 connected to an axial end portion of the transmission 102. A projection 105 for fitting into a fitting recess 104 provided on the transmission 102 is formed on an axial end portion of the motor 101. The axial end portion of the transmission 102 is also formed with a fitting projection 107 for fitting into a fitting recess 106 on the driven device 103. With such a type of motor attachment structure, output gears 108, 109 intermesh with mating gears (not shown) in axially aligned state by fitting the projections 105, 107 and the recesses 104, 103 to each other.

For example, such a connecting structure has been applied to electrical motor power assisted bicycles which are operated by a resultant force of a rider's pedal force and the driving force of the electric motor having a planetary gear type transmission interposed between the electrical motor and the driven components of the bicycle such as shown in European patent applications 0517224, 0569954, 0590674 or 0559231.

The afore-indicated attachment structure for connecting an electrical motor, a planetary gear type transmission and a driven device to each other is disadvantageous in that in such cases the fear of a misalignment of the components is relatively large because there are two spots of fitting, namely between the motor 101 and the transmission 102 and between the transmission 102 and the driven component 103. When such an attachment error in terms of misalignment is relatively large, noise is likely to be produced additionally from the meshing areas of the output gears 108, 109 and the lifetime of said machine components is shortened.

In case of the application of such a system to a power assisted vehicle such as a bicycle moreover, when the motor power is used in addition to the human power during running, vibrations and noise are likely to increase at the transmission area facing to the electrical motor. This results from the fact that such a motor assisted bicycle obtains the assisting electrical motor torque by rotating the output shaft of a small sized motor at high speed rendering the gears in the planetary gear type transmission to rotate at high speeds as well. On the other hand, any noise reduction by high accurately machining the gears and by improving the gear meshing accuracy would result in an increase in the manufacturing costs.

As indicated above, due to the plurality of fitting engagements between the motor 101 and the transmission 102 and between the transmission 102 and the driven component 103, the attachment accuracy is impaired. Any improvements in that area, however, would imply difficulties in fitting the fitting projections 105, 107 to the fitting recesses 104, 106 or to disassemble the arrangement impairing the service ability of the power transmission system.

Accordingly, it is an objective of the present invention to provide an improved power transmission system, in particular for use with electrical motor power assisted vehicles such as bicycles, which allows an improved attachment accuracy by reducing the number of fitting spots between a motor transmission of the planetary type and a driven component and to reduce the noise radiated from such a power transmission means.

According to the present invention, the above objective is solved for a power transmission system as indicated above in that the planetary type transmission comprises a planetary roller type transmission having an outer ring being affixed nonrotatably leaving a space between the outer ring and the motor output shaft to accommodate a plurality of planetary elements frictionally engaged with the motor output shaft and the outer ring, respectively, said frictional planetary elements being rotatably supported by a carrier drivingly connected to said driven component.

Moreover, a further aspect of the present invention is to provide said power transmission system having an improved one-way clutch between a driving and driven member which provides a self-centering function and which can easily be assembled without steel balls or rollers therein reducing the size and weight of the clutch as well.

Moreover, in order to perform the further aspect of providing a self-centering one-way clutch having a simplified steel ball-or roller-free structure, the one-way clutch usable in the power transmission system according to the present invention comprises cylindrical inner and outer members which are coaxially disposed with an annular space left in between wherein a plurality of circumferencially spaced pawls are disposed and pivotably supported by the one of said inner and outer members to be prebiased into one-way engagement with engagement teeth provided along the complete facing opposite cylindrical surface of the other member, said pawl-supporting member moreover comprises at least one, preferrably a plurality of spaced self-centering slide contact projections which extend in the circumferencial direction of the member and which are in sliding contact with the engagement teeth of the other member to align the axis of the two members.

Other preferred embodiments of the present invention are laid down in the further subclaims.

In the following, the power transmission system according to the present invention is explained by means of plural embodiments thereof in conjunction with the accompanying drawings wherein:
Figure 1 is the side elevational view of an electric motor assisted bicycle wherein an embodiment of the power transmission system of the present invention is used,
Figure 2 is an enlarged partial plan view showing the relationship of a pedal-mechanism, a driving electrical motor assist and transmission and a battery case,
Figure 3 is an enlarged side elevational view of a motor and a power unit including the power transmission system according to an embodiment of the present invention, looking generally in the direction of the arrow 4 in figure 2, with portions broken away so as to show a torque sensing mechanism and speed sensor,
Figure 4 is an enlarged cross sectional view of the power unit taken along the line IV-IV of figure 3,
Figure 5 is a partially enlarged view of figure 4 showing the part forward of a pedal-operated crankshaft of the bicycle,
Figure 6 is a partially enlarged view of figure 4 showing the part backward of the pedal-operated crankshaft of the bicycle adjacent to the electrical assist motor,
Figure 7 is a further enlarged cross sectional view of a one-way clutch of the power transmission system of the present invention along lines VII-VII in figure 4,
Figure 8 is a cross sectional view along the line VIII-VIII of figure 4,
Figure 9 is an enlarged perspective view (with a portion broken away) of a one-way clutch of the power transmission system according to the present invention as shown in figure 7, located on the crankshaft side of the system,

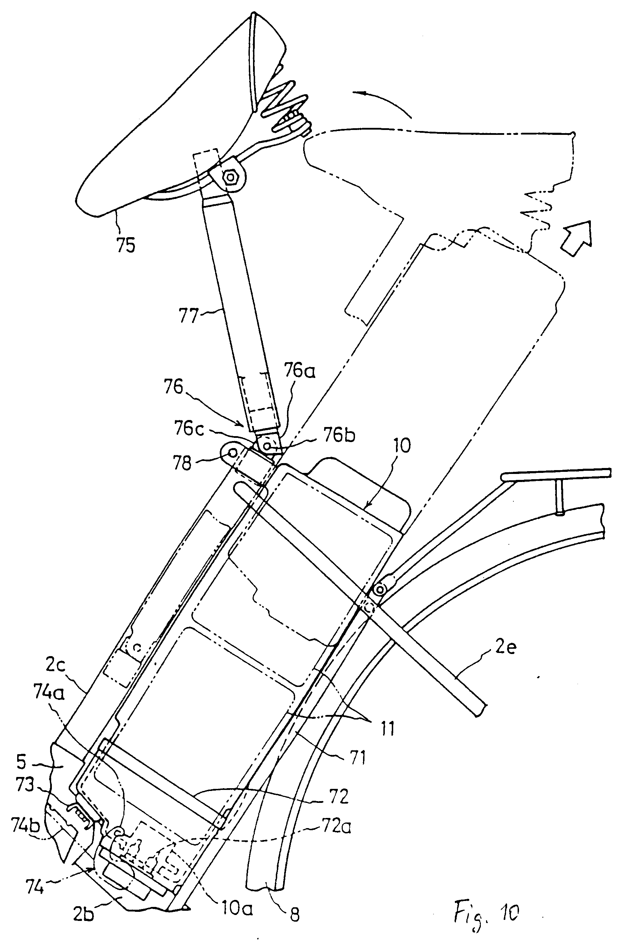

Figure 10 is an enlarged side elevational view of a battery installation area showing the interrelationship between a seat, seat pillar and battery case and shows the seat in an intermediate position and in a battery access position in phantom and solid lines, respectively,
Figure 11 is a schematic view showing the various elements of a power transmission train of a rear wheel of a motor assisted bicycle as shown in figure 1,
Figure 12 is a partially exploded view showing the electric motor and transmission arrangement of a prior art type of construction,
Figure 13 is a partial side elevational view, in part similar to figure 7 and shows the prior art type of one-way clutch construction, with portions broken away,
Figure 14 is a cross sectional view taken along the line 11-11 of figure 13, and
Figure 15 is a sectional view along the line XV-XV in figure 4 showing the roller type one-way clutch assiociated to the planetary roller type transmission according to an embodiment of the present invention.

In the following, a power transmission system according to the present invention is explained in conjunction with an electrical motor assisted bicycle to which the power transmission system according to the present invention is applied to transmit assisting motor power to a driven component such as a rear wheel of the vehicle in addition to a human power transmission provided from a pedal-operated crankshaft.

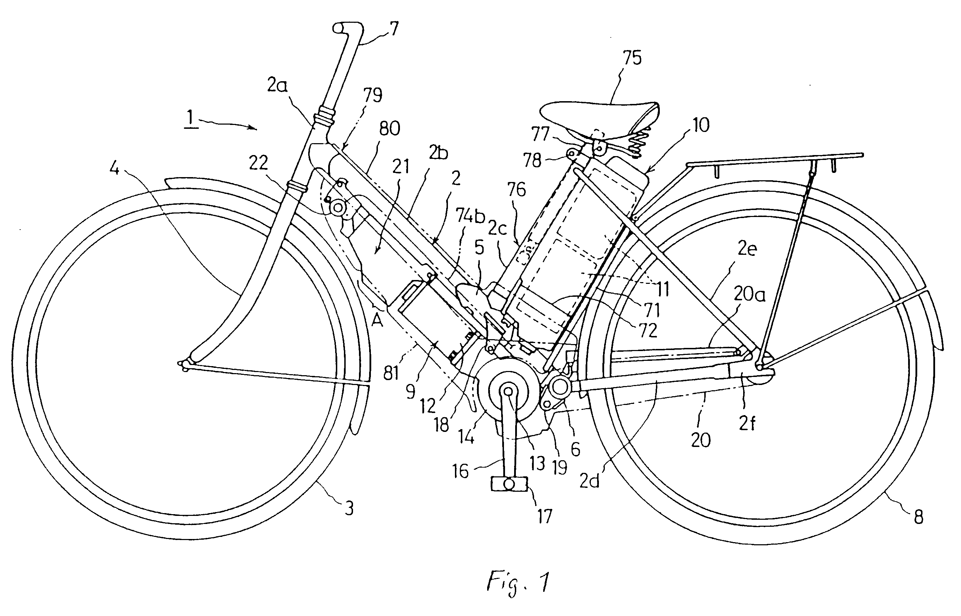

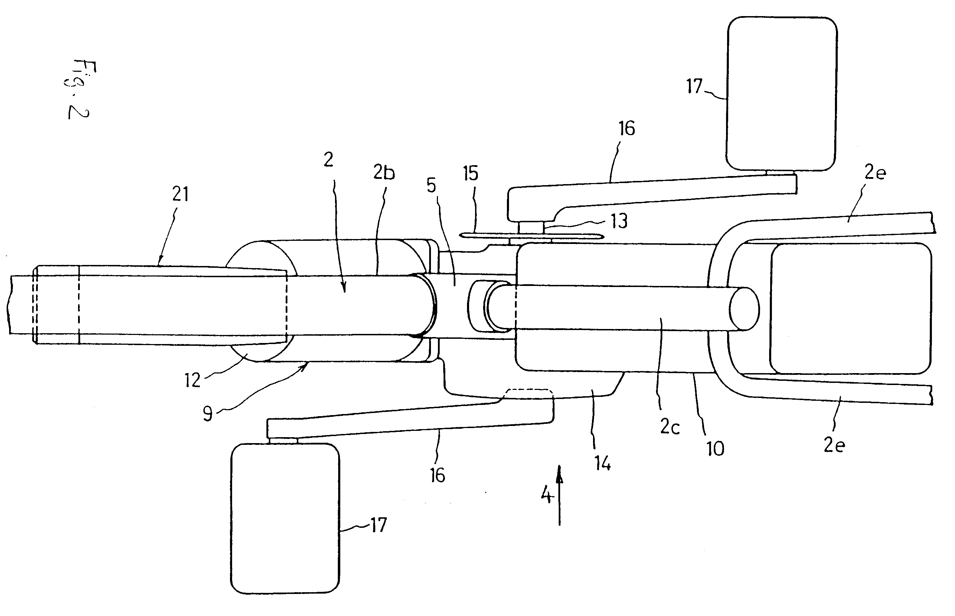

Figures 1 and 2 show a motor-operated bicycle (1) and a frame (2) of the motor-operated bicycle (1). The frame (2) comprises a head pipe (2a) supporting a front fork (4) for free steering with the front fork (4) supporting a front wheel (3) for free rotation, a down tube (2b) extending from the head pipe (2a) back downward, a seat tube (2c) connected through a middle lug (5) to the rear part of the down tube (2b), a pair of right and left chain stays (2d) connected through the a hanger lug (6) to the rear part of the down tube (2b), and a pair of right and left seat stays (2e) connecting the upper part of the seat tube (2c) to the rear end parts of the chain stays (2d).

A pair of handlebars (7) is is attached to the upper end part of the front fork (4). The rear end parts of the chain stay (2d) and the seat stay (2e) are joined to be integral with a rear wheel bracket (2f) on either side of a rear wheel (8) to support the rear wheel (8) for free rotation.

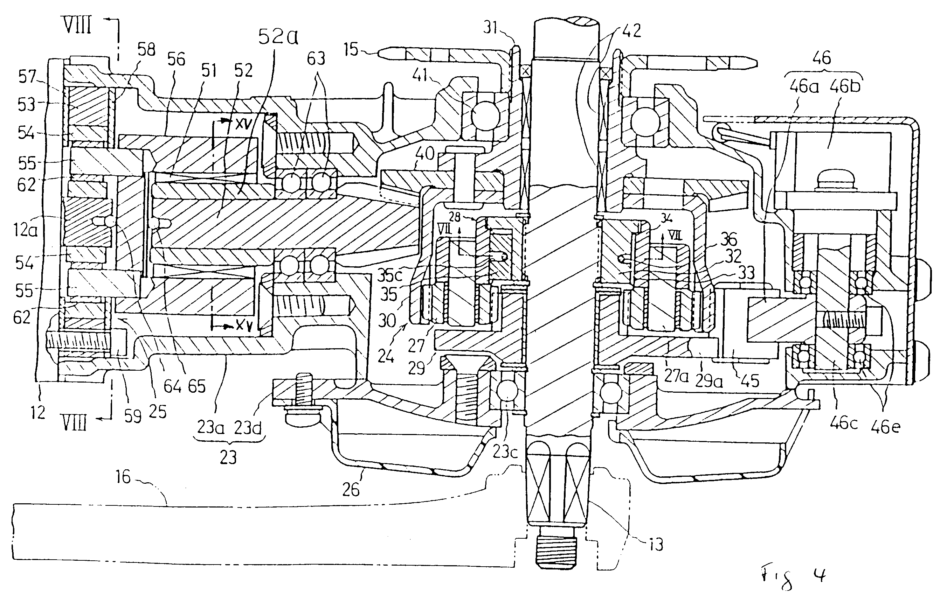

An assist power unit (9) of the motor-operated bicycle (1) is provided with a new type of one-way clutch 28 as explained hereinafter. The assist power unit (9) comprises; a motor (12) receiving electric power from a battery (11) accommodated in a battery case (10) and controlled by a control unit which will be described later, a power unit (14) having a crankshaft (13), a crank gear (15) provided on the right hand side of the crankshaft (13) as shown in FIG. 4, a crank (16), and a pedal (17).
(0020)

In the assist power unit (9), the power unit (14) is centered on the crankshaft (13). The motor (12) is located along and below the down tube (2b) and in front of the crankshaft (13), and connected through connection brackets (18, 19) to the middle lug (5) and to the hanger lug (6). In this embodiment, the assist power unit (9) is mounted on the frame (2) so that a rotary shaft (12a) to be described later of the motor (12) is parallel to the down tube (2b).

A crank gear (15) located on the right hand side of the assist power unit (9) is connected through a chain (20) to a freewheel (not shown) of the rear wheel (8). The freewheel is constituted with a known one-way clutch for transmitting power from the chain (20) only to the rear wheel (8). In FIG. 1, a chain cover (20a) is shown to enclose the chain (20).

A control unit (21) and a main switch (22) both mounted on the down tube (2b) are connected to the motor (12) of the assist power unit (9).

The control unit (21) is constituted to rotate the motor (12) to transmit power of the motor (12) to the crankshaft (13) only when the main switch (22) is set to on and a rider exerts a pedal force on the crank shaft (13). In other words, when a pedal (17) is depressed, the crankshaft receives a torque from the motor (12) in addition to the pedal force. The output of the motor (12) is controlled by the control unit (21) so as to be generally proportional to the pedal force exerted on the pedal (17). The pedal force is detected by a pedal force detection mechanism of the power unit (14) which will be described later.

The attachment locations of the control unit (21) and the main switch (22) are below the down tube (2b) and forward of the motor (12). Therefore, the main switch (22), control unit (21), motor (12), and power unit (14) are arranged in a row along the down tube (2b) from front to rear.

The main switch (22) is constituted such that, when a key (not shown) is inserted and turned clockwise from the neutral position for example in FIG. 1, the control unit (21) is electrically connected to the battery (11), and when turned counterclockwise, a locking device for a battery case is released, which will be described later.

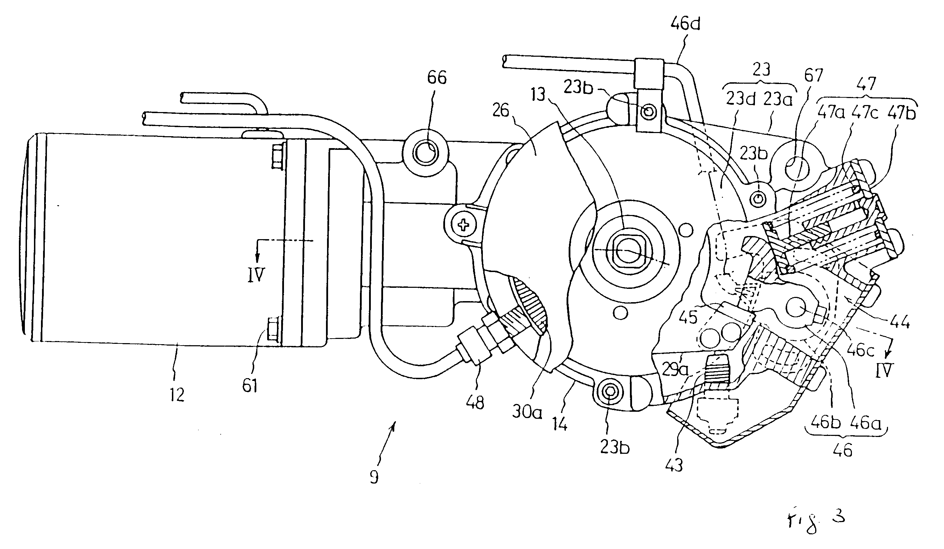

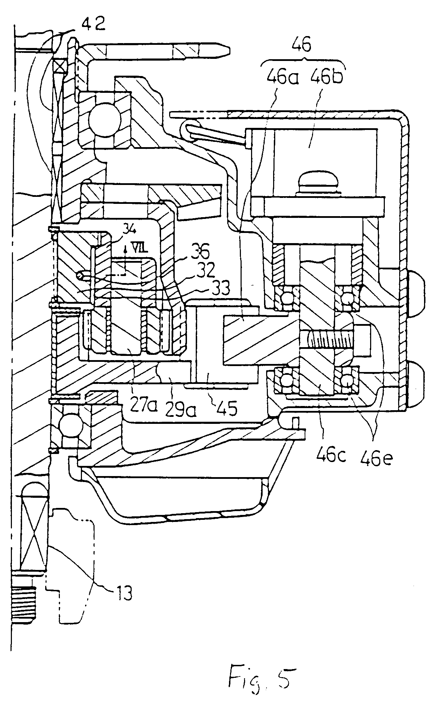

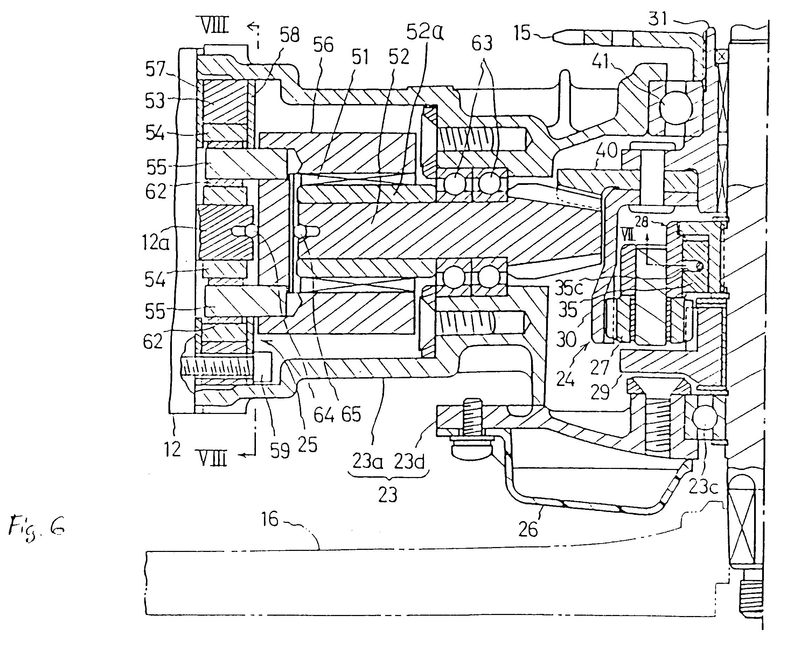

Further details of the structure of the assist power unit (9) will be described in reference to FIGs. 3 through 8. The crankshaft (13) is supported for free rotation by a case (23) of the power unit (14). The motor (12) is secured to one end of the case (23) so that the motor axis is at right angles to the crankshaft (13). Between the crankshaft (13) and the rotary shaft (12a) of the motor (12) are interposed a planetary gear type step-up transmission (24) and a planetary roller type transmission (25). In this assist power unit (9), all the rotating parts arranged coaxially with the crankshaft (13) are made smaller in diameter than the crank gear (15) to secure a sufficient ground clearance by reducing their sizes.

The case (23), as shown in FIG. 4, comprises a case body (23a) and a lid member (23d). The crankshaft (13) passes through the case body (23a) in which the planetary gear type step-up transmission (24) is housed. The lid member (23d) is secured by screws to a left hand side, larger diameter one of openings on both ends of the cylindrical portion to close the opening while supporting the left end of the crankshaft for free rotation by means of a bearing (23c). In the present embodiment, a cover (26) of a generally circular shape is secured to the outside of the lid member (23d). All the major components (the motor (12), planetary gear type step-up transmission (24), planetary roller type transmission (25), etc.) of the assist power unit (9) are attached to the case body (23a). The constitution described above makes it possible to interconnect the major components with high accuracy and to secure assembly strength.

The planetary gear type step-up transmission (24) comprises planetary gears (27) supported by the crankshaft (13) through a one-way clutch (28) constituted according to the present invention, a sun gear (29) supported for free rotation by the crankshaft (13), and an outer circumferential gear (30) extending cylindrically outward in the vehicle width direction and secured by rivets to a cylindrical output shaft (31). The outer circumference of the outer circumferential gear (30) is formed with a smaller diameter on the cylindrical output shaft (31) side than on the side where the planetary gears (27) engage to prevent the size of the planetary gear type step-up transmission (24) from increasing excessively. The one-way clutch (28) is constituted so that power is transmitted from the crankshaft (13) to the planetary gear type step-up transmission (24) only when the crankshaft (13) rotates counterclockwise as seen in FIG. 3 relative to the the planetary gear type step-up transmission (24).

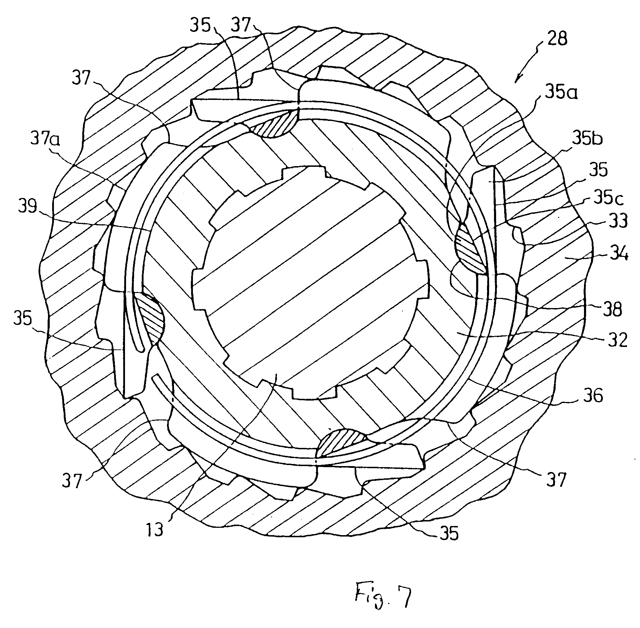

The one-way clutch 28 is shown in most detail in Figure 7, and in addition to acting as a one-way clutch, it provides a bearing arrangement for ensuring a coaxial relationship of the various elements of the one-way clutch and thus avoids the necessity of separate bearing elements to maintain the inner and outer races of the one-way clutch in their relationship.

Conventionally, the outer element was supported for rotation relative to the inner or driving element by means of roller or ball bearings and thus the bearings and associated pawl elements were all separate components that had to be assembled and added not only to the cost, but the size of the assembly. Such a prior art type of one-way clutch and bearing assembly is shown in Figures 13 and 14 wherein there is provided a driving connection between an inner hub 211 and an outer member such as a sprocket 212. The inner hub 211 has affixed for rotation with it an inner member 213 that pivotally supports a plurality of pawls 214 in pockets 215. These pawls 214 are normally biased outwardly by spring arrangement into receptive recesses 216 formed integrally within the interior of the sprocket 212 so as to establish a driving relationship in the counterclockwise direction as seen in Figure 2 but to permit the sprocket 212 to overrun the hub 211 under some conditions.

Ball bearings 217 are interposed in races formed between the hub 211 and a threaded end piece 218 and in the sprocket 212. As a result, it is necessary to provide a complicated assembly arrangement for maintaining the desired relative rotational axes between the hub 211 and sprocket 212 which adds significantly to the cost and complexity of the assembly.

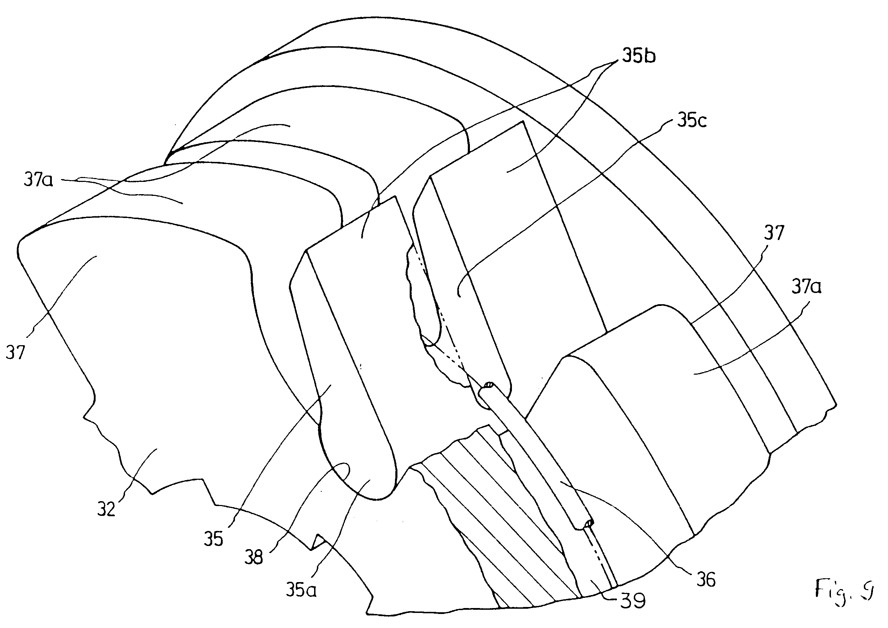

Because of the construction which will be described, it will be seen that the necessity for separate bearings is avoided with the one-way clutch mechanism, which is indicated generally by the reference numeral 28 in Figures 7 and 9.

The one-way clutch (28), as shown in FIGs. 7 and 9, comprises an inner ring (32) of a generally annular shape and secured to the crankshaft (13) by means of splines, an outer ring (34) formed with a hollow portion to accommodate the inner ring (32) and with engagement teeth (33) of saw tooth-like cross section over the entire inner circumference, pawls (35) interposed between the inner ring (32) and the outer ring (34), and a spring (36) urging the pawls (35) to engage with the engagement teeth (33). The outer ring (34) is provided with pivot shafts (27a) for supporting the planetary gears (27) for free rotation and serving also as carrier.

The outer circumference of the inner ring (32) is provided with four projections (37) as slide contact projections projecting radially outward and equally spaced over the outer circumference. Pawl supporting recesses (38) of a concave arcuate cross section are formed on the outer circumference of the inner ring (32) at locations among the projections (37). Each projection (37) has a projection end surface (37a) which is an arcuate surface about the center of the inner ring (32). When the inner ring (32) is installed in the hollow space of the outer ring (34), the projection end surfaces (37a) of all the projections (37) come in sliding contact with the apexes of the engagement teeth (33). The projection (37) is also formed with a circumferential groove (39) for receiving the spring (36).

The pawl (35) is made up of a base portion (35a) of an arcuate cross section for freely slidable fit into the recess (38) in the inner ring (32) and of an engagement portion (35b) extending forward, in the rotating direction of the inner ring (32) (counterclockwise in FIG. 7) during power transmission, from the base portion (35a) for the extended end of the pawl to engage with the engagement teeth (33). The engagement tooth (33) has a gentle slope from the apex forward in the rotating direction, during power transmission, of the inner ring (32) and a steep slope on the opposite side. The pawl (35) is formed with a cut (35c) extending from its extended end toward the base portion (35a) for receiving the spring (36). The bottom of the cut (35c) is formed flat and sloped in the extending direction of the engagement portion (35b) as shown in FIG. 7.

The slope angle of the bottom surface is set under the state shown in FIG. 7, showing the base portion (35a) fit in the recess (38) and the engagement portion (35b) engaging with the engagement tooth (33), so that the rear end portion of the bottom surface opposite to the rotating direction of the inner ring (32) during power transmission projects radially more outward than the forward portion. The spring (36) is in contact with the projecting end of the bottom surface. The spring (36) is formed in an annular shape with a part of it cut open and installed in the inner ring (32) in radially expanded state. In other words, the end of the bottom surface of the cut (35c) in contact with the spring (36) is pressed radially inward of the inner ring (32) so that the pawl (35) is urged to rotate about the base portion (35a) clockwise in FIG. 7 and that the engagement portion (35b) is always pressed against the engagement tooth (33).

In the one-way clutch (28), the outer ring (34) is axially aligned with the inner ring (32) by the contact of all the projections (37) of the inner ring (32) with the apexes of the engagement teeth (33) and is supported for free rotation by the inner ring (32) without using steel balls or the like. The power (or the pedal force produced when the pedal (17) is depressed) is transmitted from the inner ring (32) to the outer ring (34) only when the crankshaft (13) and the inner ring is rotated counterclockwise relative to the outer ring (34) as seen in FIG. 7. The one-way clutch (28) does not transmit power as when the crank (16) is pedalled backward, or the outer ring (34) rotates counterclockwise faster than the inner ring (32).

The planetary gear type step-up transmission (24), when the outer ring (34) rotates together with the inner ring (32) and the sun gear (29) is made not to rotate relative to those two components, causes the outer circumferential gear (30) to rotate in the same direction at a speed increased by a specified speed ratio. The power of the crankshaft (13) is transmitted through the chain (20) and the freewheel to the rear wheel (8) by the rotation of the cylindrical output shaft (31) to which the outer circumferential gear (30) is riveted and by the rotation of the crank gear (15) secured to the axial end of the cylindrical output shaft (31). As shown in FIG. 4, a ring gear (40) to which power is transmitted from the planetary roller type transmission (25) which will be described later is riveted, together with the outer circumferential gear (30), to the cylindrical output shaft (31) supported for free rotation through a bearing (41) by the case body (23a). The end portion of the crankshaft (13) on the right hand side of the vehicle is supported for free rotation through a bearing (42) in the hollow portion of the cylindrical output shaft (31).

To restrict the rotation of the sun gear (29), this embodiment employs as shown in FIG. 3 a stopper (43) and a pedal force detection mechanism (44). The stopper (43) is screwed into the case body (23a) so that its fore-end comes in contact with the lower end surface of the arm (29a) of the sun gear (29). The pedal force detection mechanism (44) comprises a potentiometer device (46) coming from above into contact with a contact plate (45) riveted to the projecting end of the arm (29), and a pressing device (47) for urging the potentiometer device (46) toward the contact plate (45). The contact plate (45) is made wide enough to reduce surface pressure.

The potentiometer (46) of the pedal force detection mechanism (44) comprises a lever (46a) having a swinging end for coming into contact with the contact plate (45), and a potentiometer proper (46b) connected to the lever (46a), and is fixedly supported by the case body (23a). The potentiometer proper (46b) is arranged for free rotation about an input shaft (46c) with its axis perpendicular to the drawing surface of FIG. 3 and connected to the lever (46a). Rotation angle of the input shaft (46c) is detected and the detected signal is sent through a lead (46d) to the control unit (21). The input shaft (46c) is supported for free rotation by the case body (23a).

The pressure device (47) comprises a pressing element (47a) for coming into contact with the swinging end of the lever (46a), a case (47b) secured to the case body (23a) and supporting the pressing element (47a) for free movement to and away from the lever (46a), and a compression coil spring (47c) for urging the pressing element (47a) toward the lever (46a).

In other words, when the planetary gears (27) rotate counterclockwise as seen in FIG. 3 together with the outer ring (34), the sun gear (29) is urged to rotate counterclockwise by the rotary reactional force from the outer circumferential gear (30). However, the force is transmitted through the contact plate (45) and the lever (46a) to the pressure device (47) and absorbed by the pressure device (47). Therefore, the sun gear (29) is prevented from rotating after being permitted to rotate by an angle corresponding to the amount of travel of the pressing element (47a).

In this way, when the sun gear (29) rotates, the potentiometer proper (46b) detects the amount of rotation and outputs the detected signal to the control unit (21). Here, the control unit (21) controls the motor (12) according to the detected signal from the potentiometer proper (46b). The motor (12) is controlled so that its revolution is in proportion to the amount of rotation of the sun gear (29). To describe more in detail, the revolution of the outer circumferential gear (30) is detected by a revolution sensor (48) shown in FIG. 3. From the revolution of the outer circumferential gear (30) and the amount of rotation of the sun gear (29) detected by the potentiometer proper (46b), a motor drive force is calculated as shown in FIG. 9 by the control unit (21) to drive the motor (12). Therefore, the motor (12) is controlled to produce a torque generally proportional to the pedal force produced by depressing the pedal (17). Here, the revolution sensor (48) is of a known type screwed into the case body (23a). The screwed in end of the sensor (48) opposes with a minute gap to the left hand side end of the outer circumferential gear (30) to detect the revolution by utilizing changes in the magnetic resistance caused by a large number of teeth (30a) formed on the outer circumferential gear (30). The use of the teeth (30a) formed on the outer circumferential gear (30) for detecting the revolution in this way eliminates the need for a special component for detecting the revolution when detecting the revolution by means of the revolution sensor (48).

Next, the structure of a power train connected to the motor (12) will be described. As shown in FIG 4, a rotary shaft (12a) of the motor (12) is connected to the cylindrical output shaft (31) through the planetary roller type transmission (25), a one-way clutch (51) on the motor side, an output gear member (52) and the ring gear (40) engaging with the output gear member (52). A collar (52a) is press-fit into the output gear member (52).

The planetary roller type transmission (25) comprises an outer ring (53) formed in the shape of a cylinder having a diameter greater than that of the rotary shaft (12a) of the motor (12) and secured to the end portion of the shaft of the motor (12) coaxially with the rotary shaft, a plurality of planetary rollers (54) arranged between and contacted by the outer ring (53) and the rotary shaft (12a), and an carrier (56) having pins (55) respectively supporting the planetary rollers (54) for free rotation and transmitting power to the output gear member (52) through the one-way clutch (51) located on the motor side.

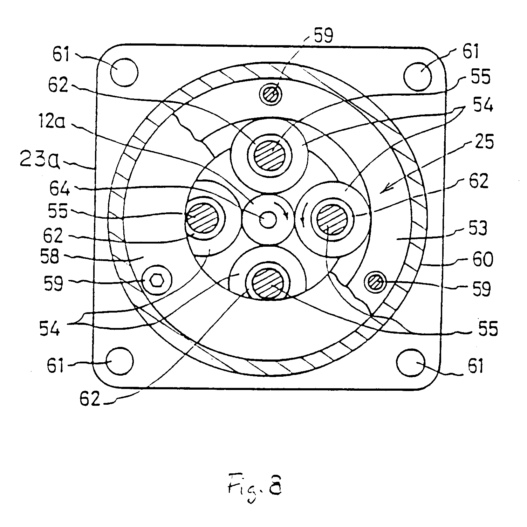

Guide plates (57, 58) are arranged on both axial side ends of the outer ring (53) to prevent the planetary rollers (54) from moving in the axial directions. The outer ring (53) is secured to the motor (12) by means of securing bolts (59). The through holes in the outer ring (53) and the guide plates (57, 58) for passing the securing bolt (59) are formed with a diameter greater than the diameter of the bolts (59) so that the positions of those components are not restricted radially by the bolts (59). As shown in FIG. 8, a circular fitting portion (60) of the case body (23a) fits over the outer circumference of the outer ring (53). Namely the outer circumferential surface of the outer ring (53) constitutes a fitting surface. The motor (12) is connected to the case body (23a) in the state of the outer ring (53) being fit into the circular fitting portion (60) by means of connection bolts (61).

As shown in FIG. 8, in this embodiment, four planetary rollers (54) are arranged at equal intervals along the circumferential direction of the outer ring (53) and each roller (54) is supported for free rotation by a bearing (62) and a pin (55) press fit into the carrier (56). The carrier (56) is formed in a bottomed cylindrical shape with the pin (55) studded to project, and its hollow space accommodates the one-way clutch (51) located on the motor side and the output gear member (52).

With the planetary roller type transmission (25) constituted as described above, when the rotary shaft (12a) of the motor (12) rotates clockwise as shown with the arrow in FIG. 8, each of the planetary rollers (54) rotates in the direction opposite to the rotating direction of the rotary shaft (12a) and rolls over the inner surface of the outer ring (53) so as to revolve clockwise. Thus, the carrier(56) rotates clockwise as seen in FIG. 8 at a specified speed reduction ratio.

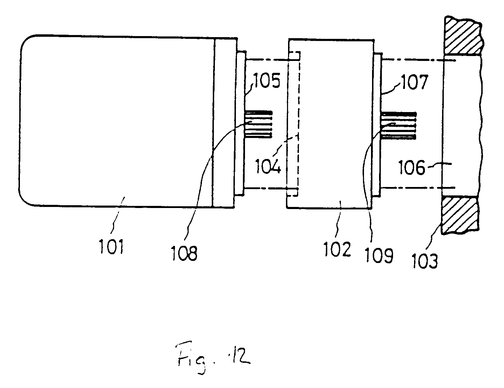

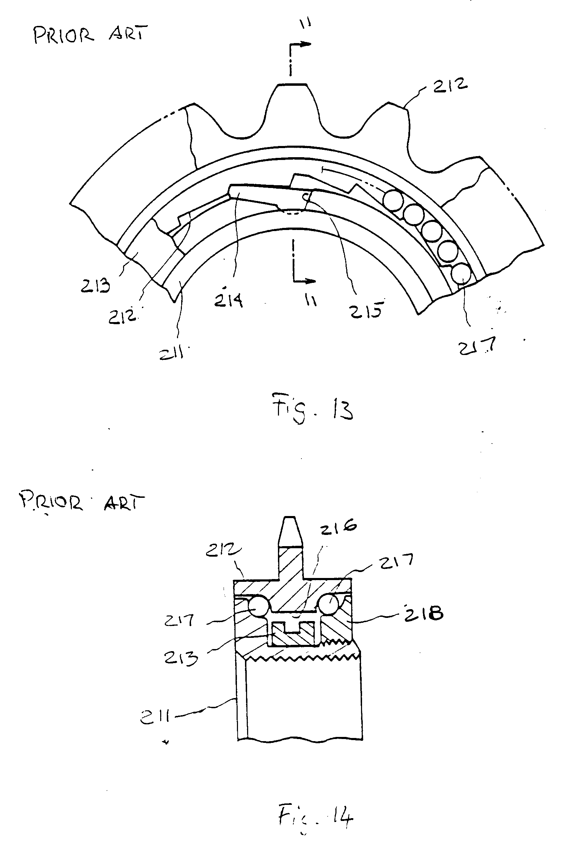

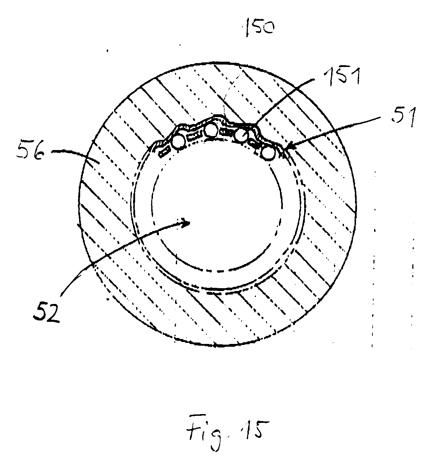

The motor side one-way clutch (51) as shown in cross section in FIG. 15 installed in the hollow space in the carrier (56) transmits its rotation to the output gear member (52) only when the carrier (56) rotates clockwise as seen in FIG. 8 relative to the output gear member (52). For that reason, engagement rollers (151) are provided between the cylindrical output gear member and a serrated inner surface of the carrier (56). Said engagement rollers my be split, respectively, into a plurality of, for example three roller pieces of different lengths in the axial direction with a bearing cage portion (150) in between. The output gear member (52) is supported by a bearing (63) in the case body (23a) so that its movement in the axial direction is restricted. Its axial end on the motor side is connected to the motor side one-way clutch (51) while the opposite end is formed as a bevel gear meshing with the ring gear (40).

In other words, when the carrier (56) rotates as described above, the power of the motor (12) is transmitted from the carrier (56) through the output gear member (52) and the ring gear (40) to the cylindrical output shaft (31).

The reason for interposing the motor side one-way clutch (51) in the power transmission train of the motor (12) in this way is to prevent drive resistance from being increased by the transmission of power from the crankshaft (13) through the ring gear (40), the output gear member (52), and the planetary roller type transmission (25) to the motor (12), as when revolution of the motor (12) slows down as a result of decrease in the power of the battery (11), or when the motor power is intentionally turned off to drive by the human power only.

Here, balls (64, 65) are installed respectively in circular recesses formed at the ends of the rotary shaft (12a) and the output gear member (52) so as to be located between the rotary shaft (12a) and the bottom surface of the carrier (56) and between the inner bottom surface of the carrier (56) and the output gear member (52) for preventing the carrier (56) from coming into contact with the rotary shaft (12a) or with the output gear member (52) when an axial thrust is applied to the carrier (56).

Here, procedure for installing the motor (12) and the planetary roller type transmission (25) in the case body (23a) will be described. First the carrier (56) is installed in the outer ring (53). At this time, the guide plate (58) is interposed between the carrier (56) and the outer ring (53), the bearings (62) and planetary rollers (54) are installed on the pins (55), and they are installed inside the outer ring (53). The outer ring (53) to which the carrier (56) is attached as described above is secured to the motor (12) with the guide plate (57) interposed between the outer ring (53) and the motor (12). At this time, the rotary shaft (12a) of the motor (12) is press fit among the planetary rollers (54) so that the planetary rollers (54) and the carrier (56) can rotate relative to the rotary shaft (12a). At the same time with this, the ball (64) is placed to be held between the rotary shaft (12a) and the carrier (56). This causes the outer ring (53) and the carrier (56) to be axially lined up with the rotary shaft (12a).

Next, the outer ring (53) and the guide plates (57, 58) are secured by bolts (59) to the motor (12). Thus, the planetary roller type transmission (25) is attached to the motor (12). In this case, diameter of the through holes in the outer ring (53) and the guide plates (57, 58) through which the bolts are passed are made larger than the diameter of the bolt so that the positions of the outer ring (53) and the guide plates (57, 58) are not restricted by the bolts. Namely, no special fitting structure is required to connect the planetary roller type transmission (25) to the motor (12).

After that, the outer circumference surface of the outer ring (53) is fit in the circular fitting portion (60) of the case body (23a). Here, the motor side one-way clutch (51) is inserted beforehand into the hollow space in the carrier (56) or fit over the output gear member (52) so that connection of the carrier (56) and the output gear member (52) is made at the motor side one-way clutch (51). Namely, the interior of the hollow space in the carrier (56) formed in a bottomed cylindrical shape serves as the axial connection portion relative to the output gear member (52) to be part of the driven device. If the carrier (56) is connected to the output gear member (52) through the motor side one-way clutch (51), spatial room in the radial direction is produced corresponding to the displacement of a working piece (not shown) of the motor side one-way clutch (51), and connection of both components can be easily made. When the carrier (56) is drawn out from the output gear member (52) on the other hand, the drawing is also made under the condition of radial spatial room.

When the output gear member (52) is to be connected to the carrier (56), the ball (65) is also installed beforehand in the output gear member (52).

The attachment of the motor (12) to the case body (23a) by the connection bolts (61) completes the installation of the motor (12) and the planetary roller type transmission (25).

To mount the assist power unit (9) on the frame (2), as shown in FIG. 3, bolt holes (66. 67) drilled in the case body (23a) are lined up with the bolt holes in the brackets (18, 19) and the case body (23a) is secured to the brackets (18, 19) by means of bolts.

Next, the structure of the battery case (10) accommodating the battery (11) for supplying electric power to the motor (12) will be described.

The battery case (10) is formed as shown in FIGs. 1 and 8 in a box shape elongate in up and down directions, accommodating two batteries (11), and placed between the seat tube (2c) and the rear wheel (8). In other words, the dimensions of the battery case (10) are set, as seen in FIG. 2, so that the dimension in the vehicle width direction is within the space between two seat stays (2e) and the dimension in the fore-and-aft directions is within the space between the seat tube (2c) and a right and left pair of auxiliary seat tubes (71). The auxiliary seat tubes (71) extend generally parallel to the seat tube (2c) between the rear end of the down tube (2b) and a cross member bridging the right and left stays (2e).

As shown in FIG. 2, the battery case (10), the assist power unit (9), and the control unit (21) are all accommodated in the space between the right and left cranks (16, 16).

To mount the battery case (10) on the vehicle body, a bottomed support box (72) opening upward is arranged near the rear end of the down tube (2b) in which the lower end of the battery case (10) is fit from above. The support box (72) is supported indirectly by the frame (2) with the lower front part of the support box (72) connected to a bracket (73) of the middle lug (5). As a result, the battery case (10) is mounted on the vehicle body so as to be detachable in the upward direction of the vehicle. A male connector (72a) is provided on the bottom of the support box (72) to be electrically connected to a female connector (10a) provided on the lower end of the battery case (10). A lock mechanism (74) is provided on the bottom of the support box (72) to prevent the battery case (10) from being removed from the vehicle body by an unauthorized person.

The male connector (72a) is electrically connected through a main switch (22) to the control unit (21) and the motor (12). A contact piece projects into the support box (72). Namely, when the battery case (10) is fit from above into the support box (72), the female connector (10a) on the battery case (10) side is electrically connected to the female connector (72a) so that electrical connection is made from the battery (11) to the main switch (22) and other electric devices.

The lock mechanism (74) is mounted for free rotation on the support box (72) and has an engagement pawl (74a) capable of freely engaging with and disengaging from the battery case (10) so that the battery case (10) is locked by fitting the battery case (10) into the support box (72). The pawl (74a) is connected through a wire (74b) to the main switch (22) so as to be disengaged when a key of the main switch (22) is turned to the lock releasing side (counterclockwise in FIG. 1).

In the state shown in FIG. 1, a saddle (75) located at the top end of the seat tube (2c) stands in the way of the battery case (10) when it is lifted up. However, the saddle (75) can be moved away from the path of attachment and removal of the battery case (10) by a seat tilt mechanism (76) which will be described later.

The saddle (75) is attached to the top end of a seat pillar tube (77) and attached to the frame (2) by inserting the seat pillar tube (77) into the seat tube (2c). The saddle (75) in the present embodiment is padded and sprung. The seat pillar tube (77) has a certain length so as to change the height of the saddle (75) according to the size of a rider, with a seat tilt mechanism (76) provided at its lower end. To change the height of the saddle (75), a seat pin (78) provided at the upper end of the seat tube (2c) to change the upper end opening diameter of the seat tube (2c) is loosened, the seat pillar tube (77) is pulled up from the seat tube (2c) by pulling up the saddle (75). When the saddle (75) is positioned to a desired height, the seat pin (78) is tightened to squeeze the seat pillar tube (77) by the upper opening of the seat tube (2c).

The seat tilt mechanism (76) comprises an upper member (76a) inserted in and secured by the lower end of the seat pillar tube (77), and a lower member (76c) pivoted for free swing to the upper member (76a) through a pivot pin (76b) and inserted in the seat tube (2c). The pivot pin (76b) is attached with its axis directed in the vehicle width direction. As a result, while the upper member (76a) may swing back and forth relative to the lower member (76c), the upper member (76a) of the present embodiment tilts forward only relative to the lower member (76c).

In other words, when the vehicle is driven, the seat tilt mechanism (76) is inserted in the seat tube (2c) as shown In FIG. 1 and the seat pillar tube (77) is secured to the seat tube (2c). In the state of the seat pillar tube (2c) being drawn out all the way upward and the upper part of the lower member (76c) exposed above the upper opening of the seat tube (2c), the seat pillar tube (77) and the saddle (75) can be tilted from the position shown with phantom lines in FIG. 8 about the pivot pin (76b) to the position shown with solid lines.

A vehicle cover (79) in FIG. 1 comprises upper and lower covers (80, 81) and encloses the down tube (2b) and electric components (the main switch (22), control unit (21), assist power unit (9), etc. attached to the down tube). The lower cover (81) has an opening in the area (shown with a symbol A in FIG. 1) where the lower front part of the control unit (21) is located. Thus, the control unit (21) liable to be heated can be effectively cooled by natural wind.

Next, the function of the motor-operated bicycle (1) will be described in reference to FIG. 9. When the main switch (22) is off, assist power of the motor (12) is not applied, and rotation of the crankshaft (13) is transmitted through the crankshaft side one-way clutch (28), planetary gear type transmission (24), cylindrical output shaft (31), and chain (20) to the rear wheel side freewheel, so that the rear wheel (8) is driven by the pedal force only produced by depression on the pedal (17).

When the main switch (22) is on, assist power proportional to the pedal force is applied from the motor (12) to the cylindrical output shaft (31) so that the rear wheel (8) is driven by a resultant force of the pedal force and the assist power. Here, signals of the pedal force detected by the pedal force detection mechanism (44) and of the revolution of the outer circumferential gear (30) detected by the revolution sensor (48) are input into the control unit (21) to control the motor (12) to produce torque proportional to the pedal force. In other words, power of the motor (12) is transmitted from the planetary roller type transmission (25) connected to the rotary shaft (12a), through the motor side one-way clutch (51), output gear member (52), and ring gear (40) to the cylindrical output shaft (31) and combined there with the pedal force from the crankshaft (13) and further transmitted through the chain (20) and the freewheel to the rear wheel.

Thus, since the motor-operated bicycle (1) is constituted the rotation of the motor (12) is reduced by the planetary roller type transmission (25) and transmitted to the output shaft of the human power drive system (cylindrical output shaft (31)), there is no meshing portion in the transmission. Power is transmitted not by mutual engagement of gears but by frictional force working on the circumferential surface of the rollers. As a result, vibration or noise is not produced from the transmission area even if the rotary shaft (12a) of the motor (12) rotates at high speeds.

When the motor (12) and the planetary roller type transmission (25) are attached to the power unit (14), axial alignment between the motor (12) and the planetary roller type transmission (25) is performed by interposing a plurality of planetary rollers (54) between the rotary shaft (12a) of the motor (12) and the outer ring (53). Therefore, no special fit connection parts are required for attaching the planetary roller type transmission to the motor. As a result, there is only one fitting location for connecting together the motor, planetary type transmission, and driven device, which makes it possible to maintain high attachment accuracy.

Furthermore, since the carrier (56) of the planetary roller type transmission (25) is formed in a bottomed cylindrical shape and connected to the output gear member (52) through the motor side one-way clutch (51) housed in the hollow space in the carrier so that the interior of the hollow space serves as an axial connection portion relative to the output gear member (52), radial spatial room is produced in the axial connection portion by a dimension corresponding to the displacement of the working piece of the motor side one-way clutch (51). Therefore, the output gear member (52) is easily attached to or removed from the carrier (56).

The arrangement of the motor (12) under the down tube (2b) as shown in the present embodiment makes it possible to arrange the motor (12) and the power unit (14) in succession in a wide space under the down tube (2b). As a result, power transmission path of the motor (12) becomes simple and short.

The arrangement of the battery (11) above the down tube (2b) makes it easy to receive the weight of the battery (11) with the down tube (2b). Furthermore, the arrangement of the battery (11) behind the seat tube (2c) produces a large clearance for leg passage so that the battery (11) does not stand in the way when the rider rides and get off the vehicle.

The separate forming of the outer circumferential gear (30), ring gear (40), and cylindrical output shaft (31) of the power unit (14) and joining them by rivets, as shown in the present embodiment, makes it possible to use an optimum material for the function of each component, preventing excessive quality and increase in cost.

While the entire outer circumferential area of the outer ring (53) is used as a fitting surface for fitting the outer ring (53) into the case body (23a) in the present embodiment, the arrangement is not limited to this but part of the outer circumferential area of the outer ring (53) may be used as the fitting surface. In that case, the shape of the outer ring (53) may be other than cylindrical. In other words, the shape of the fitting portion between the outer ring (53) and the case body (23a) may be suitably changed as long as an inner circumferential surface of the outer ring (53) is formed for contact by the planetary rollers (54).

While the present embodiment is an example of applying the motor attachment structure to the assist power unit (9) of the motor-operated bicycle (1), applying to any other arrangement is possible as long as a planetary type transmission is interposed between a motor and a driven device. Moreover, also the newly designed one-way clutch (28) can be utilized otherwise as well, for example as a free wheel or in other appliances.

As described above, the motor-operated bicycle as an embodiment for the utilization of the power transmission system is provided with the human power drive system, the electric drive system arranged parallel to the human power drive system, and the control device for controlling the output of the electric drive system according to changes in the human power drive force, and the rotation of the motor to be the power source of the electric drive system is reduced by the planetary roller type transmission and transmitted to the output shaft of the human power drive system. As a result, there is no meshing portion in the transmission for reducing the rotation of the motor.

The transmission described above transmits power not by mutual engagement of gears but by frictional force working on the circumferential surface of the rollers. As a result, vibration and noise are less likely to be produced from the transmission area even if the rotary shaft of the motor rotates at high speeds.

The planetary roller type transmission is provided with an outer ring cylindrically formed with a diameter greater than that of a rotary shaft of the motor and secured to an end of the motor coaxially with the rotary shaft of the motor, a plurality of planetary rollers interposed between the motor rotary shaft and outer ring with each roller in side by side contact with those two components, and a carrier supporting those planetary rollers for free rotation and transmitting power to the driven device, and the outer circumferential surface of the outer ring is formed with a fitting surface for fitting into the driven device. As a result, axial alignment between the motor and the planetary type transmission is obtained by interposing a plurality of planetary rollers between the motor rotary shaft and the outer ring, and no special fitting portion is required for attaching the planetary type transmission to the motor.

Therefore, only one fitting location suffices for fitting the motor, planetary type transmission, and driven device to each other. As a result, high attachment accuracy is maintained, and noise is prevented from being produced from connection area between rotating components. Such a connection area becomes less likely to wear and its life is extended.

The planetary roller type transmission comprises the carrier formed in a bottomed cylindrical shape with the bottom provided with a plurality of pivot shafts for supporting planetary rollers for free rotation and connected to the driven device through the one-way clutch housed in the hollow space in the carrier so that the interior of the hollow space serves as an axial connection portion relative to the driven device, radial spatial room is produced in the axial connection portion by a dimension corresponding to the displacement of the working piece of the one-way clutch.

Therefore, the driven device is easily attached to or removed from the carrier. Furthermore, since the hollow space is formed by extending the carrier in the axial direction, the axis of the hollow space is also determined with high accuracy and noise is prevented from being produced from the one-way clutch area, and since the axial connection mechanism is installed inside like a part of the planetary type transmission, axial dimension is reduced although the arrangement has the axial connection mechanism.

## Claims

1. Power transmission system, specifically for an electrically power assisted vehicle such as a bicycle (1), comprising a rotary motor output shaft (12a) of an electrical motor (12), a planetary type transmission (25) disposed coaxially to said output shaft (12a) drivingly connected thereto and a driven component drivingly connected with said planetary type transmission (25),
**characterized in that**
the planetary type transmission comprises a planetary roller type transmission (25) having an outer ring (53) being affixed non-rotatably leaving a space between the outer ring (53) and the motor output shaft (12a) to accommodate a plurality of planetary elements (54) frictionally engaged with the motor output shaft (12a) and the outer ring (53), respectively, said frictional planetary elements (54) being rotatably supported by a carrier (56) drivingly connected to said driven component.

2. Power transmission system as claimed in claim 1, **characterized in that** the driven component comprises a vehicle wheel (8) driven from a manually operated crankshaft (13) and, selectively, additionally by electrical power assist from the electrical motor (12), said manual driving power and said electrical assist driving power being transmitted to said vehicle wheel (8) via said planetary roller type transmission (25) and a planetary gear type transmission (24).

3. Power transmission system as claimed in claim 2, **characterized in that** the rotary motor output shaft (12a) is disposed substantially perpendicularly to the crankshaft (13).

4. Power transmission system as claimed in at least one of the preceding claims 1 to 3, **characterized in that** the carrier (56) comprises a bottomed cylinder comprising a plurality of pins (55) projecting from the bottom portion of the carrier (56), adapted to support the planetary elements (54) in a freely rotatable manner.

5. Power transmission system as claimed in claim 4, **characterized in that** the planetary elements comprise planetary rollers (54) rotatably supported in a slip fit by said pins (55) which are affixed to the bottom portion of the carrier (56).

6. Power transmission system as claimed in at least one of the preceding claims 1 to 5, **characterized in that** the outer ring (53) is affixed to an end portion of a motor housing of said electrical motor (12) and is disposed coaxially to the rotary motor output shaft (12a) of the motor (12).

7. Power transmission system as claimed in claim 6, **characterized in that** radial side plates (57,58) are disposed at both sides of the frictional elements (54) to prevent same from being displaced axially.

8. Power transmission system as claimed in claim 7, **characterized in that** the outer ring (53) which is affixed to the motor housing comprises an outer surface defining a press-fitting receipt surface for a circular fitting portion of a transmission case body (23a).

9. Power transmission system as claimed in at least one of the preceding claims 4 to 8, **characterized in that** the carrier (56) in the shape of a bottomed cylinder accommodates a shaft-like output gear member (52) rotatably disposed within the transmission case body (23a) and drivingly connected to the carrier (56) via a one-way clutch (51).

10. Power transmission system as claimed in claim 9, **characterized in that** the one-way clutch (51) is a roller type clutch disposed within an annular space between the carrier (56) in the shape of a bottomed cylinder and the shaft-like output gear member (52).

11. Power transmission system as claimed in claim 10, **characterized in that** the shaft-like output gear member (52) comprises a bevel gear in mesh with a ring gear (40) which receives input torque from the planetary gear type transmission (24) as well.

12. Power transmission system as claimed in at least one of the preceding claims 8 to 11, **characterized in that** the transmission case body (23a) jointly houses at least the planetary gear type transmission (24) and the planetary roller type transmission (25).

13. Power transmission system as claimed in claim 12, **characterized in that** the planetary gear type transmission (24) is disposed between the ring gear (40) and the crankshaft (13) which is pedal-operated, said ring gear (40) encircling the crankshaft (13).

14. Power transmission system as claimed in at least one of the preceding claims 1 to 13, **characterized in that** another one-way clutch (28) is disposed between the planetary gear type transmission (24) and a crankshaft (13).

15. Power transmission system as claimed in claim 14, **characterized in that** the planetary gear type transmission (24) comprises planetary gears (27) supported by the crankshaft (13) via the one-way clutch (28), a sun gear (29) supported on the crankshaft (13) to be freely rotatable and an outer circumferential gear (30) affixed to an output shaft (31) drivingly connected to the driven component.

16. Power transmission system as claimed in at least one of the preceding claims 1 to 15, **characterized in that** the power transmission system forms part of an electrical power assisted vehicle, in particular a bicycle (1).

17. Power transmission system as claimed in claim 16, **characterized in that** the driven component is a rear wheel (8) of a bicycle (1).

18. Power transmission system as claimed in claim 17, **characterized in that** the rear wheel (8) is driven by a chain drive (20) by a sprocket (15) affixed to the cylindrical hollow output shaft (31) which is disposed coaxially to the manually driven crankshaft (13), said cylindrical hollow output shaft (31) forming a joint output member of the manually driven crankshaft (13) and the electrically driven rotary output shaft (12a) of a selectively assisting electrical motor (12).

19. Power transmission system as claimed in claim 15, **characterized in that** said one-way clutch (28) comprises cylindrical inner and outer members (32,34) which are coaxially disposed with an annular space left in between wherein a plurality of circumferentially spaced paws (35) are disposed and pivotably supported at one of said members (32,34) to be prebiased into one-way engagement with engagement teeth (33) provided along a facing cylindrical opposite surface of the other member (32,34), said paw-supporting member (32) comprising at least one cylindrical centering slide contact projection (37) which extends in the circumferential direction and which is in sliding contact with the engagement teeth (33) of the other member (32,34) to provide a self-centering rotational bearing of said both members (32,34).

20. Power transmission system as claimed in claim 19, **characterized in that** the one-way clutch (28) comprises an inner ring (32) of generally annular shape and secured to the crankshaft (13) by means of splines, an outer ring (34) formed with a hollow portion to accommodate the inner ring (32) and provided with engagement teeth (33) of saw tooth-like cross section along the entire inner circumference, pawls (35) interposed between the inner ring (32) and the outer ring (34) pivotably accommodated in pawls-supporting recesses (38) of concave arcuate cross section formed on the outer circumference of the inner ring (32) at locations free from the centering projections (37) and an annular spring (36) urging the pawls (35) to engage with the engagement teeth (33) of the outer ring (34).

21. Power transmission system as claimed in claim 20, **characterized in that** said outer ring (34) being provided with pivot shafts (27a) for supporting the planetary gears (27) of a planetary gear type transmission (24) to establish a carrier for free rotation of said planetary gears (27).

## Patentansprüche

1. Energieübertragungssystem, insbesondere für ein mit elektrischer Energie unterstütztes Fahrzeug, wie beispielsweise ein Fahrrad (1), das eine Drehmotorabtriebswelle (12a) eines elektrischen Motors (12), ein Getriebe (25) vom Planeten-Typ, das koaxial zu der Abtriebswelle (12a) angeordnet antriebsmäßig damit verbunden ist, und eine angetriebene Komponente, die antriebsmäßig mit dem Getriebe (25) vom Planeten-Typ verbunden ist, aufweist,
dadurch gekennzeichnet,
daß das Getriebe vom Planeten-Typ ein Getriebe (25) vom Planetenrollen-Typ aufweist, das einen äußeren Ring (53) besitzt, der nicht drehbar befestigt ist, unter Belassung eines Raums zwischen dem äußeren Ring (53) und der Motorabtriebswelle (12a), um eine Vielzahl von Planetenelementen (54) aufzunehmen, die reibungsmäßig mit der Motorabtriebswelle (12a) und dem äußeren Ring (53) jeweils in Eingriff gebracht sind, wobei die reibungsmäßigen Planetenelemente (54) drehbar durch einen Träger (56) gestützt sind, der antriebsmäßig mit der angetriebenen Komponenten verbunden ist.

2. Energieübertragungssystem nach Anspruch 1, dadurch gekennzeichnet, daß die angetriebene Komponente ein Fahrzeugrad (8) aufweist, das von einer manuell betätigten Kurbelwelle (13), und, wahlweise, zusätzlich durch elektrische Energieunterstützung von dem elektrischen Motor (12) angetrieben wird, wobei die manuelle Antriebsenergie und die elektrisch unterstützte Antriebsenergie zu dem Fahrzeugrad (8) über das Getriebe (25) vom Planetenrollen-Typ und ein Getriebe (24) vom Planetenzahnrad-Typ übertragen werden.

3. Energieübertragungssystem nach Anspruch 2, dadurch gekennzeichnet, daß die Drehmotorabtriebswelle (12a) im wesentlichen senkrecht zu der Kurbelwelle (13) angeordnet ist.

4. Energieübertragungssystem nach mindestens einem der vorhergehenden Ansprüche 1 bis 3, dadurch gekennzeichnet, daß der Träger (56) einen mit Boden versehenen Zylinder aufweist, der eine Vielzahl von Stiften (55) aufweist, die von dem Bodenbereich des Trägers (56) vorstehen, angepaßt so, um die Planetenelemente (54) in einer frei drehbaren Art und Weise zu tragen.

5. Energieübertragungssystem nach Anspruch 4, dadurch gekennzeichnet, daß die Planetenelemente Planetenrollen (54) aufweisen, die drehbar in einer Schlupfpassung durch die Stifte (55) getragen sind, die an dem Bodenbereich des Trägers (56) befestigt sind.

6. Energieübertragungssystem nach mindestens einem der vorhergehenden Ansprüche 1 bis 5, dadurch gekennzeichnet, daß der äußere Ring (53) an einem Endbereich eines Motorgehäuses des elektrischen Motors (12) befestigt ist und koaxial zu der Drehmotorabtriebswelle (12a) des Motors (12) angeordnet ist.

7. Energieübertragungssystem nach Anspruch 6, dadurch gekennzeichnet, daß radiale Seitenplatten (57, 58) an beiden Seiten der Reibungselemente (54) angeordnet sind, um zu verhindern, daß dieselben axial verschoben werden.

8. Energieübertragungssystem nach Anspruch 7, dadurch gekennzeichnet, daß der äußere Ring (53), der an dem Motorgehäuse befestigt ist, eine äußere Oberfläche aufweist, die eine Preßpassungs-Aufnahmeoberfläche für einen kreisförmigen Paßbereich eines Getriebegehäusekörpers (23a) aufweist.

9. Energieübertragungssystem nach mindestens einem der vorhergehenden Ansprüche 4 bis 8, dadurch gekennzeichnet, daß der Träger (56) in der Form eines mit Boden versehenen Zylinders ein wellenähnliches Abtriebszahnradteil (52) aufnimmt, das drehbar innerhalb des Getriebegehäusekörpers (23a) angeordnet ist und antriebsmäßig mit dem Träger (56) über eine Einwegkupplung (51) verbunden ist.

10. Energieübertragungssystem nach Anspruch 9, dadurch gekennzeichnet, daß die Einwegkupplung (51) eine Kupplung vom Rollen-Typ ist, die innerhalb eines ringförmigen Raums zwischen dem Träger (56) in der Form eines mit Boden versehenen Zylinders und dem wellenähnlichen Abtriebszahnradteil (52) angeordnet ist.

11. Energieübertragungssystem nach Anspruch 10, dadurch gekennzeichnet, daß das wellenähnliche Abtriebszahnradteil (52) ein Kegelzahnrad in Eingriff mit einem Ringzahnrad (40) aufweist, das ein Eingangsdrehmoment von dem Getriebe (24) vom Planetenzahnrad-Typ ebenso aufnimmt.

12. Energieübertragungssystem nach mindestens einem der vorhergehenden Ansprüche 8 bis 11, dadurch gekennzeichnet, daß der Getriebegehäusekörper (23a) gemeinsam mindestens das Getriebe (24) vom Planetenzahnrad-Typ und das Getriebe (25) vom Planetenrollen-Typ aufnimmt.

13. Energieübertragungssystem nach Anspruch 12, dadurch gekennzeichnet, daß das Getriebe (24) vom Planetenzahnrad-Typ zwischen dem Ringzahnrad (40) und der Kurbelwelle (13), die mittels Pedal betätigt ist, angeordnet ist, wobei das Ringzahnrad (40) die Kurbelwelle (13) umgibt.

14. Energieübertragungssystem nach mindestens einem der vorhergehenden Ansprüche 1 bis 13, dadurch gekennzeichnet, daß eine andere Einwegkupplung (28) zwischen dem Getriebe (24) vom Planetenzahnrad-Typ und einer Kurbelwelle (13) angeordnet ist.

15. Energieübertragungssystem nach Anspruch 14, dadurch gekennzeichnet, daß das Getriebe (24) vom Planetenzahnrad-Typ Planetenzahnräder (27), die durch die Kurbelwelle (13) über eine Einwegkupplung (28) getragen sind, ein Sonnenzahnrad (29), das auf der Kurbelwelle (13) so getragen ist, um frei drehbar zu sein, und ein äußeres, umfangsmäßiges Zahnrad (30), das an einer Abtriebswelle (31) befestigt ist, die antriebsmäßig mit der angetriebenen Komponenten verbunden ist, aufweist.

16. Energieübertragungssystem nach mindestens einem der vorhergehenden Ansprüche 1 bis 15, dadurch gekennzeichnet, daß das Energieübertragungssystem einen Teil eines mit elektrischer Energie unterstützten Fahrzeugs, insbesondere eines Fahrrads (1), bildet.

17. Energieübertragungssystem nach Anspruch 16, dadurch gekennzeichnet, daß die angetriebene Komponente ein hinteres Rad (8) eines Fahrrads (1) ist.

18. Energieübertragungssystem nach Anspruch 17, dadurch gekennzeichnet, daß das hintere Rad (8) durch einen Kettenantrieb (20) über ein Kettenzahnrad (15), das an der zylindrischen, hohen Abtriebswelle (31) befestigt ist, die koaxial zu der manuell angetriebenen Kurbelwelle (13) angeordnet ist, angetrieben wird, wobei die zylindrische, hohle Abtriebswelle (31) ein Verbindungsabtriebsteil der manuell angetriebenen Kurbelwelle (13) und der elektrisch angetriebenen Drehabtriebswelle (12a) eines selektiv unterstützenden, elektrischen Motors (12) bildet.

19. Energieübertragungssystem nach Anspruch 15, dadurch gekennzeichnet, daß die Einwegkupplung (28) ein zylindrisches inneres und äußeres Teil (32, 34) aufweist, die koaxial mit einem ringförmigen Raum dazwischen belassen angeordnet sind, wobei eine Vielzahl von umfangsmäßig beabstandeten Klauen (35) angeordnet ist und schwenkbar an einem der Teile (32, 34) angeordnet und schwenkbar getragen ist, um in einen Einwegeeingriff mit Eingriffszähnen (33) hinein vorgespannt zu sein, die entlang einer dazu hinweisenden, zylindrischen, gegenüberliegenden Oberfläche des anderen Teils (32, 34) vorgesehen sind, wobei das Klauentrageteil (32) mindestens einen zylindrischen, zentrierenden Gleitkontaktvorsprung (37) aufweist, der sich in der umfangsmäßigen Richtung erstreckt und in gleitendem Kontakt mit den Eingriffszähnen (33) des anderen Teils (32, 34) steht, um ein sich selbst zentrierendes Drehlager der beiden Teile (32, 34) zu bilden.

20. Energieübertragungssystem nach Anspruch 19, dadurch gekennzeichnet, daß die Einwegkupplung (28) einen inneren Ring (32) einer im wesentlichen ringförmigen Form und gesichert an der Kurbelwelle (13) mittels Keilwellennuten, einen äußeren Ring (34), der mit einem hohlen Bereich ausgebildet ist, um den inneren Ring (32) aufzunehmen, und mit Eingriffszähnen (33) eines sägezahnähnlichen Querschnitts entlang des gesamten, inneren Umfangs versehen ist, Klauen (35), die zwischen dem inneren Ring (32) und dem äußeren Ring (34) schwenkbar aufgenommen in Klauentragevertiefungen (38) eines konkaven, gebogenen Querschnitts, der auf dem äußeren Umfang des inneren Rings (32) an Stellen frei von den zentrierenden Vorsprüngen (37) zwischengefügt sind, und eine ringförmige Feder (36), die die Klauen (35) so drückt, um mit den Eingriffszähnen (33) des äußeren Rings (34) einzugreifen, aufweist.

21. Energieübertragungssystem nach Anspruch 20, dadurch gekennzeichnet, daß der äußere Ring (34) mit Schwenkwellen (27a) zum Tragen der Planetenzahnräder (27) eines Getriebes (24) vom Planetenzahnrad-Typ versehen wird, um einen Träger für eine freie Drehung der Planetenzahnräder (27) einzurichten.

## Revendications

1. Système de transmission de puissance, spécifiquement pour un véhicule assisté électriquement telle qu'une bicyclette (1), comprenant un arbre de sortie moteur (12a) rotatif d'un moteur électrique (12), une transmission (25) de type planétaire, disposée coaxialement par rapport audit arbre de sortie (12a) qui lui est relié en l'entraînant, et un composant entraîné relié, de façon entraînée par elle, à ladite transmission de type planétaire (25),
caractérisé en ce que
la transmission de type planétaire comprend une transmission de type à rouleaux planétaire (25) ayant une couronne extérieure (53) fixée de façon non rotative, laissant subsister un espace entre la couronne extérieure (53) et l'arbre de sortie du moteur (12a) pour loger une pluralité de satellite (54) engagés par friction contre l'arbre de sortie du moteur (12a) et la couronne extérieure (53), respectivement, lesdits satellites à friction (54) étant supportés à rotation par un support (56) relié, en l'entraînant, audit composant entraîné.

2. Système de transmission de puissance selon la revendication 1, caractérisé en ce que le composant entraîné comprend une roue de véhicule (8), entraînée par un vilebrequin (13) actionné manuellement et, sélectivement, en outre, par une assistance électrique provenant du moteur électrique (12), ladite puissance d' entraînement manuel et ladite puissance d'assistance électrique étant transmises à ladite roue de véhicule (8) via ladite transmission de type à rouleaux planétaire (25) et une transmission de type à engrenage planétaire (24).

3. Système de transmission de puissance selon la revendication 2, caractérisé en ce que l'arbre de sortie du moteur (12a) rotatif est disposé sensiblement perpendiculairement au vilebrequin (13).

4. Système de transmission de puissance selon au moins l'une des revendications 1 à 3 précédentes, caractérisé en ce que le support (56) comprend un cylindre à fond comprenant une pluralité de tiges (55) faisant saillie de la partie inférieure du support (56), adaptées de façon à supporter les satellites (54) à rotation libre.

5. Système de transmission de puissance selon la revendication 4, caractérisé en ce que les satellites comprennent des rouleaux satellites (54) montés à rotation dans un montage coulissant par lesdites tiges (55) qui sont fixées à la partie inférieure du support (56).

6. Système de transmission de puissance selon au moins l'une des revendications 1 à 5 précédentes, caractérisé en ce que la couronne extérieure (53) est fixée à une partie d'extrémité d'un boîtier moteur dudit moteur électrique (12) et est disposée coaxialement à l'arbre de sortie moteur (12a) rotatif du moteur (12).

7. Système de transmission de puissance selon la revendication 6, caractérisé en ce que des plaques latérales radiales (57, 58) sont disposées des deux côtés des éléments de friction (54) pour les empêcher de se déplacer axialement.

8. Système de transmission de puissance selon la revendication 7, caractérisé en ce que la couronne extérieure (53) qui est fixée au boitier de moteur comprend une surface extérieure définissant une surface de réception de montage par pressage pour une partie de montage circulaire d'un corps de carter de transmission (23a).

9. Système de transmission de puissance selon au moins l'une des revendications 4 à 8 précédentes, caractérisé en ce que le support (56) se présentant sous la forme d'un cylindre à fond loge un organe formant pignon de sortie (52) en forme d'arbre, monté tournant dans le corps de carter de transmission (23a) et relié en entraînement au support (56) via un embrayage à roue libre (51).

10. Système de transmission de puissance selon la revendication 9, caractérisé en ce que l'embrayage à roue libre (51) est un embrayage de type à rouleaux disposé dans un espace annulaire entre le support (56) se présentant sous la forme d'un cylindre à fond et l'organe formant pignon de sortie (52) en forme d'arbre.

11. Système de transmission de puissance selon la revendication 10, caractérisé en ce que l'organe formant pignon de sortie (52) en forme d'arbre comprend un pignon conique engrenant avec une couronne dentée (40) qui reçoit également un couple d'entrée à partir de la transmission de type à engrenage planétaire (24).

12. Système de transmission de puissance selon au moins l'une des revendications 8 à 11 précédentes, caractérisé en ce que le corps de carter de transmission (23a) loge conjointement au moins la transmission de type à engrenage planétaire (24) et la transmission de type à rouleaux planétaire (25).

13. Système de transmission de puissance selon la revendication 12, caractérisé en ce que la transmission de type à engrenage planétaire (24) est disposée entre la couronne dentée (40) et le vilebrequin (13) qui est actionné par pédalage, ladite couronne dentée (40) entourant le vilebrequin (13).

14. Système de transmission de puissance selon au moins l'une des revendications 1 à 13, caractérisé en ce qu'un autre embrayage à roue libre (28) est disposé entre la transmission de type à engrenage planétaire (24) et un vilebrequin (13).

15. Système de transmission de puissance selon la revendication 14, caractérisé en ce que la transmission de type à engrenage planétaire (24) comprend des satellites dentés (27) supportés par le vilebrequin (13) via l'embrayage à roue libre (28), une roue solaire (29) supportée sur le vilebrequin (13) de façon à tourner librement, et une couronne dentée (30) fixée à un arbre de sortie (31) relié en entraînement au composant entraîné.

16. Système de transmission de puissance selon au moins l'une des revendications 1 à 15 précédentes, caractérisé en ce que le système de transmission de puissance fait partie d'un véhicule assisté par puissance électrique, en particulier une bicyclette (1).

17. Système de transmission de puissance selon la revendication 16, caractérisé en ce que le composant entraîné est une roue arrière (8) d'une bicyclette (1).

18. Système de transmission de puissance selon la revendication 17, caractérisé en ce que la roue arrière (8) est entraînée par un dispositif d'entraînement de chaîne (20) au moyen d'un pignon (15) fixé à l'arbre de sortie creux (31) cylindrique qui est disposé coaxialement par rapport au vilebrequin (13) entraîné manuellement, ledit arbre de sortie creux (31) cylindrique formant un organe de sortie associé au vilebrequin (13) entraîné manuellement et à l'arbre de sortie (12a) rotatif entraîné électriquement d'un moteur électrique d'assistance sélective (12).

19. Système de transmission de puissance selon la revendication 15, caractérisé en ce que ledit embrayage à roue libre (28) comprend des organes intérieur et extérieur (32, 34) cylindriques qui sont disposés coaxialement dans un espace annulaire laissé à l'intérieur, dans lequel une pluralité de cliquets (35) espacés circonférentiellement sont disposés et supportés à pivotement au niveau de l'un desdits organes (32, 34) pour être pré-déplacés en contact unidirectionnel avec des dents d'engagement (33) prévues le long d'une surface opposée cylindrique faisant face de l'autre organe (32, 34), ledit organe de support de cliquets (32) comprenant au moins une saillie de contact coulissant de centrage (37) cylindrique qui s'étend dans la direction circonférentielle et qui est en contact coulissant avec les dents d'engrenage (33) de l'autre organe (32, 34) pour constituer un palier rotatif auto-centreur desdits deux organes (32, 34).

20. Système de transmission de puissance selon la revendication 19, caractérisé en ce que l'embrayage à roue libre (28) comprend une couronne intérieure (32) de forme globalement annulaire et fixée au vilebrequin (13) au moyen de cannelures, une couronne extérieure (34) pourvue d'une partie creuse pour loger la couronne intérieure (32) et pourvue de dents d'engagement (33) d'une section transversale en forme de dents de scie sur toute la circonférence intérieure, des cliquets (35), disposés entre la couronne intérieure (32) et la couronne extérieure (34), logés à pivotement dans des cavités de support de cliquets (38) d'une section transversale de forme arquée concave, formées sur la circonférence extérieure de la couronne intérieure (32), en des emplacements exempts des saillies de centrage (37), et un ressort annulaire (36) poussant les cliquets (35) pour s'engager contre les dents d'engagement (33) de la couronne extérieure (34).

21. Système de transmission de puissance selon la revendication 20, caractérisé en ce que ladite couronne extérieure (34) est pourvue d'arbres de pivot (27a) pour supporter les satellites dentés (27) d'une transmission de type à engrenage planétaire (24), pour établir un support permettant la rotation libre desdits satellites dentés (27).
